# EUROPÄISCHE PATENTSCHRIFT

(11) **EP 0 568 947 B1**
(45) Veröffentlichungstag und Bekanntmachung des Hinweises auf die Patenterteilung: **20.03.1996**
(21) Anmeldenummer: 93107113.8
(22) Anmeldetag: 03.05.1993
(51) Int. Cl.: A01D 34/70

(54) **Maschine zum Mähen und/oder Aufsammeln von Gut mit einem mit einem Förderkanal vertikal schwenkbar verbundenen Schutzdeckel**
Mowing and/or collecting machine with a guard plate pivotally mounted on a discharge chute
Machine à couper et/ou ramasser munie d'un volet de sécurité monté à pivotement sur une goulotte de décharge

(30) Priorität: 07.05.1992 US 880124
(43) Veröffentlichungstag der Anmeldung: 10.11.1993
(73) Patentinhaber: DEERE & COMPANY, Moline, Illinois 61265 (US)
(72) Erfinder: Hohnl, Gary David, Slinger, Wisconsin 53086 (US)
(74) Vertreter: Feldmann, Bernhard

(56) Entgegenhaltungen:
- EP-A- 0 253 231
- DE-A- 2 044 624
- DE-A- 3 104 501
- FR-A- 2 280 309
- US-A- 3 872 656
- US-A- 4 031 694
- US-A- 4 158 279
- US-A- 4 214 424
- US-A- 4 726 177

## Beschreibung

Die Erfindung bezieht sich auf eine Maschine zum Mähen und/oder Aufsammeln von Gut, insbesondere Rasenmäher, mit einem das Gut auswerfenden und in einem Gehäuse angeordneten Arbeitswerkzeug, einem abkuppelbaren Empfängerteil für das Gut, einem Förderkanal zwischen dem Arbeitswerkzeug und dem Empfängerteil und einem zwischen einer ersten, einer zweiten und einer dritten Stellung verstellbaren und mit dem Förderkanal vertikal schwenkbar verbundenen Schutzdeckel, der in seiner ersten Stellung einen Gutfluß zu dem Empfängerteil erlaubt und diesen mit dem Förderkanal über eine erste Verriegelungseinrichtung verriegelt, in seiner zweiten Stellung den Förderkanal verschließt, wenn der Empfängerteil abgekuppelt ist, und in seiner dritten Stellung ein Abkuppeln des Empfängerteils von dem Förderkanal erlaubt.

Bei einer bekannten Maschine (US-A-4 726 177) handelt es sich um einen von Hand geführten Rasenmäher, dessen Mähwerksgehäuse mit einem aus einem Auswurfkanal mit daran angeschlossenem Graskanal bestehenden Förderkanal versehen ist. An das freie Ende des Graskanals ist der Empfängerteil in Form eines Grasfangbehälters unmittelbar vor einer den Rasenmäher schiebenden Person mit seinem einen Ende aufgehängt. Um zu verhindern, daß bei abgenommenem Grasfangbehälter die Bedienungsperson bei laufendem Mähwerk von Grasklumpen oder sich in dem geschnittenen Gras befindlichen Fremdkörpern getroffen wird, wird die in den Grasfangbehälter führende Öffnung des Graskanals durch den Schutzdeckel immer dann unter der Wirkung einer Feder verschlossen, wenn der Grasfangbehälter nicht korrekt mit dem Ende des Graskanals verriegelt ist. Im einzelnen ist der Schutzdeckel derart ausgebildet, daß er mit seinem einen Flansch aufweisenden Hauptteil die Öffnung des Graskanals im wesentlichen verschließen kann, wobei sich in der Schließstellung der Flansch um Teile der Außenwandung des Graskanals legen soll und sich über dem Hauptteil noch ein vertikaler Fortsatz befindet, der mit der Oberseite des Graskanals schwenkbar verbunden ist. Der Grasfangbehälter hat einen Eintritt mit einem Versteifungsteil, dessen Abmessungen derart sind, daß er auf das Ende des Graskanals aufgeschoben werden kann. An seinem unteren Ende wird der Versteifungsteil von einem bodenwärts offenen und an der Unterseite des Graskanals vorgesehen Haken aufgenommen, während das obere Ende des Versteifungsteils zwischen Ausleger am obersten Ende des Deckelfortsatzes oberhalb der Schwenkachse des Schutzdeckels einsetzbar ist. Zum Verriegeln des Grasfangbehälters dient ein von Hand verschwenkbarer U-Bügel mit einem federelastischen am U-Bügel schwenkbar angeschlossenen Haken, der das obere Ende des Versteifungsteils erfassen kann und bei Verschwenkung des U-Bügels den oberen Teil des Grasfangbehälters auf den Graskanal zieht und dabei den Schutzdeckel nach innen in der Grasfangbehälter verschwenkt. Bei dieser Schutzdeckelanordnung ist es von besonderem Nachteil, daß sich bei gefülltem Grasfangbehälter der Schutzdeckel im Inneren des Grasfangbehälters befindet, so daß beim Abnehmen des Fangbehälters zum Entleeren Gut durch den Schutzdeckel nach außen gerissen wird. Außerdem ist nicht auszuschließen, daß bei sich in seiner zweiten Stellung befindlichem Schutzdeckel und laufenden Mäher der Schutzdeckel durch ausgeworfenes Gut geöffnet wird. Die zusätzliche Verriegelungsvorrichtung ist teileaufwendig und damit kostspielig sowie störanfällig.

Bei einem anderen Rasenmäher ist es bereits bekannt (Honda Rasenmäher - Die Formel 1 für Ihren Rasen - Druckvermerk L9001), einen rückwärtig an das Maschinengehäuse über Querstifte anhängbaren Grasfangbehälter mit einer Kunststoffplatte zu versehen, in die bei angehängtem Fangbehälter eine zweite am Maschinengehäuse vertikal schwenkbar gelagerte und nicht elastisch deformierbare Kunststoffplatte eingreifen kann.

Bei der gattungsmäßig berücksichtigten Maschine (DE-A-2 044 624) handelt es sich um einen an Holmen geführten Rasenmäher mit einem als Empfängerteil ausgebildeten Grasfangbehälter. Letzterer ist an seiner Oberseite mit einer Öffnung versehen, die durch den Schutzdeckel, sofern er sich in seiner ersten Stellung befindet, verschließbar ist. Der Schutzdeckel wird in dieser Position durch eine Blattfeder gehalten, die mit ihrem anderen Ende an einen Bedienungshebel angeschlossen ist. Außerdem ist der Schutzdeckel noch mit Verriegelungsteilen versehen, die in der ersten Stellung entsprechende Gegenteile am Grasfangbehälter untergreifen. Zum Lösen dieser Verriegelungsteile und zum Abnehmen des Grasfangbehälters muß der Schutzdeckel aus seiner ersten Stellung in seine dritte Stellung nach unten gedrückt werden. In seiner zweiten Stellung wird der Schutzdeckel ausschließlich durch weitere Federelemente gehalten und ist nicht verriegelbar. Im Ganzen gesehen sind die Haltevorrichtungen für den Schutzdeckel aufwendig und teuer. Bei einem Nachlassen der Federspannkräfte verliert der Schutzdeckel seine Funktionen.

Die mit der Erfindung zu lösende Aufgabe wird darin gesehen, den Schutzdeckel vorteilhafter und insbesondere derart auszubilden, daß er in seiner zweiten oder Schließstellung allen Sicherheitsanforderungen genügt, in seiner ersten Stellung einen Gutfluß nicht behindert und neben dem Verschließen des Förderkanals noch weitere Aufgaben übernehmen kann. Diese Aufgabe ist dadurch gelöst worden, daß der Schutzdeckel in seiner ersten Stellung auf dem Empfängerteil aufliegt und zur Verriegelung zumindest teilweise elastisch deformierbar ausgebildet ist, in der zweiten Stellung über eine zweite Verriegelungseinrichtung mit dem Förderkanal verriegelbar ist und den Förderkanal ummantelt und aus seiner ersten Stellung in seine dritte Stellung hochschwenkbar ist.

Auf diese Weise kann der Schutzdeckel auch leicht bei rohrförmigen Empfängerteilen eingesetzt werden, da er sich in seiner ersten Stellung nicht im Bereich eines Gutstromes befindet. In keinem Fall behindert er ein Entleeren eines Fangkorbes. Seine Fähigkeit zur elastischen Deformation bedeutet, daß die Deformation nach Wegfall der sie hervorrufenden Kräfte wieder vollständig verschwindet, weshalb der Schutzdeckel Teil der Verriegelungsvorrichtung in der ersten Stellung sein kann und ein zusätzliches Verriegelungsgestänge erspart wird. Infolge der zweiten Verriegelungeinrichtung ist sein ungewolltes Öffnen durch ausgeworfenes Gut ausgeschlossen, was um so wichtiger ist, je näher der Schutzdeckel an das Arbeitswerkzeug herangerückt ist. Die Ummantelung kann als zusätzliche Führung in der ersten Stellung dienen, und die dritte Stellung ermöglicht ein einfaches Zusammenkuppeln. Derartig ausgebildete Schutzdeckel können unmittelbar mit einem Fangbehälter zusammenwirken oder irgendwo in einer Kanalführung zu einem Fangbehälter vorgesehen sein, die bei Störungen, beispielsweise bei Verstopfungen, auseinandergebaut werden muß.

Nach der Erfindung wird ferner vorgeschlagen, daß der Schutzdeckel als Schutzkappe mit einer seitlichen Ummantelung derart ausgebildet ist, daß sein eines oberhalb des Förderkanals liegendes vorderes Ende in der ersten Stellung Abstand zu der Oberseite des Förderkanals aufweist, wobei die Ummantelung an die Seiten des Förderkanals vertikal schwenkbar angeschlossen ist. Damit werden zu dem Schutzdeckel gehörende Teile zu seinem Schwenkanschluß an den Förderkanal genutzt, wobei der Schwenkanschluß so vorgesehen werden kann, daß der Schutzdeckel auf Grund seiner Schwerkraft in seine zweite Stellung verschwenkt, was auch durch eine Feder bewirkt oder noch unterstützt werden kann. Der Schwenkanschluß selbst kann dann äußerst einfach gestaltet sein, beispielsweise durch entsprechende Löcher im Förderkanal und in der Ummantelung und zwei einfache Zapfen, die von beiden Seiten sich durch die Löcher erstrecken. Dadurch, daß das vordere Ende in der ersten Stellung zu der Oberseite des Förderkanals Abstand aufweist, braucht auf dieses lediglich gedrückt zu werden, um den Schutzdeckel in seine dritte Position zu verstellen. Dies setzt natürlich voraus, daß sich das vordere Ende nicht in einer durch die Schwenkachse verlaufenden vertikalen Ebene befindet.

Infolge der gewählten Elastizität kann erfindungsgemäß ferner noch vorgesehen werden, daß der Schutzdeckel an seinem dem vorderen Ende abgelegenen rückwärtigen Ende derart ausgebildet ist, daß er in seiner ersten Stellung hinter einen auf der Außenseite des Empfängerteils vorgesehenen Riegelteil greifen kann. Dies ermöglicht eine besonders einfache Verriegelung und das rückwärtige Ende kann hierzu lippenförmig ausgestaltet sein. Die Lippe verhakt sich dann in der ersten Stellung mit dem Riegelteil. Da sie die Eigenschaft zur elastischen Deformation hat, ist ein Entriegeln ebenso einfach.

Was die zweite Verriegelungseinrichtung anbelangt, so kann die Ummantelung des Schutzdeckels mit Rasterstellen versehen sein, die in der zweiten Stellung in seitliche Vorsprünge an den Seiten des Förderkanals eingreifen. Als Rasterstellen bieten sich dann einfache Öffnungen an, wobei die Ummantelung im Bereich des rückwärtigen Endes des Schutzdeckels und im Bereich der Rasterstellen elastisch deformierbar ausgebildet ist. Damit das Verriegeln in der zweiten Stellung äußerst leicht und gegebenenfalls selbsttätig erfolgen kann, können die Vorsprünge rampenförmig ausgebildet sein. Beim Einrasten biegt sich die Ummantelung dann in diesem Bereich nach außen und nimmt nach dem Einrasten wieder ihre ursprüngliche Form an.

Auch das Verriegeln des Förderkanals mit dem Empfängerteil kann mehr oder weniger selbsttätig erfolgen, wenn der Riegelteil an einer Seite mit einer Riegelfläche und an der anderen Seite mit einer Rampe versehen ist. Beim Verriegeln schiebt sich dann der Schutzdeckel einfach über die Rampe und fällt gegen die Riegelfläche.

Die elastische Deformation läßt sich leicht mit einem Kunststoff erreichen.

Zum einfachen Entriegeln in der zweiten Position wird nach der Erfindung außerdem vorgeschlagen, daß der Schutzdeckel im Bereich seiner Rasterstellen mit Griffteilen versehen ist. Über diese kann die Ummantelung einfach nach außen gezogen werden, um die Rasterstellen lösen zu können. Über die Griffteile kann der Schutzdeckel auch leicht in seine dritte Stellung oder in eine Zwischenstellung verstellt werden, wenn hierzu nicht das in seiner zweiten Position über den unteren Rand des Förderkanals überstehende Ende des Schutzdeckels bevorzugt wird, welches ein leichtes Ablösen des Schutzdeckels beim Verschwenken aus seiner zweiten Stellung begünstigt.

Schließlich kann nach der Erfindung noch vorgesehen sein, daß das Ende des Förderkanals als ein Gebläseauslaß eines Hilfsgebläses ausgebildet ist, der über den Schutzdeckel in seiner ersten Stellung mit einem Gutkanal verriegelbar ist, wobei der Gutkanal zu einem Fangbehälter führt und in der dritten Stellung in den Gebläseauslaß einsetzbar ist. Die an sich bekannten Hilfsgebläse unterstützen eine Gutförderung bei langen Gutkanälen, beispielsweise, wenn ein Mähwerk frontseitig an einem Fahrzeug angeschlossen ist, oder, wenn feuchtes oder nasses Laub oder Gras gefördert wird. Bei eventuellen Verstopfungen und abgebautem Gutkanal ist ein leichter Zugang zu dem Gebläse möglich. Über das Schauglas kann ohne öffnen des Schutzdeckels gesehen werden, ob sich auch im Bereich des Gebläses Gutansammlungen befinden.

In der Zeichnung ist ein nachfolgend näher erläutertes Ausführungsbeispiel der Erfindung dargestellt. Es zeigt:
- Fig. 1: einen Kleinschlepper in der Draufsicht mit einem zwischen seinen Achsen angebauten Mähwerk und einem rückwärtigen Grasfangbehälter, der mit einem seitlich neben dem Mähwerk vorgesehen Hilfsgebläse über einen Graskanal verbunden ist,
- Fig. 2: den Kleinschlepper nach Fig. 1 in Seitenansicht,
- Fig. 3: die Verbindung des Gebläseauslasses mit dem Graskanal in vergrößerter Darstellung und in Seitenansicht, wobei ein am Gebläseauslaß schwenkbar angeordneter Schutzdeckel den Graskanal mit dem Gebläseauslaß verriegelt,
- Fig. 4: den Schutzdeckel nach Fig. 3 in einer Stellung, in der der Graskanal von dem Gebläseaustritt abgenommen werden kann,
- Fig. 5: den Schutzdeckel nach Fig. 3 und 4 in einer Stellung, in der er den Gebläseauslaß verschließt und
- Fig. 6: den Schutzdeckel und den Gebläseaustritt in perspektivischer und auseinandergezogener Darstellung.

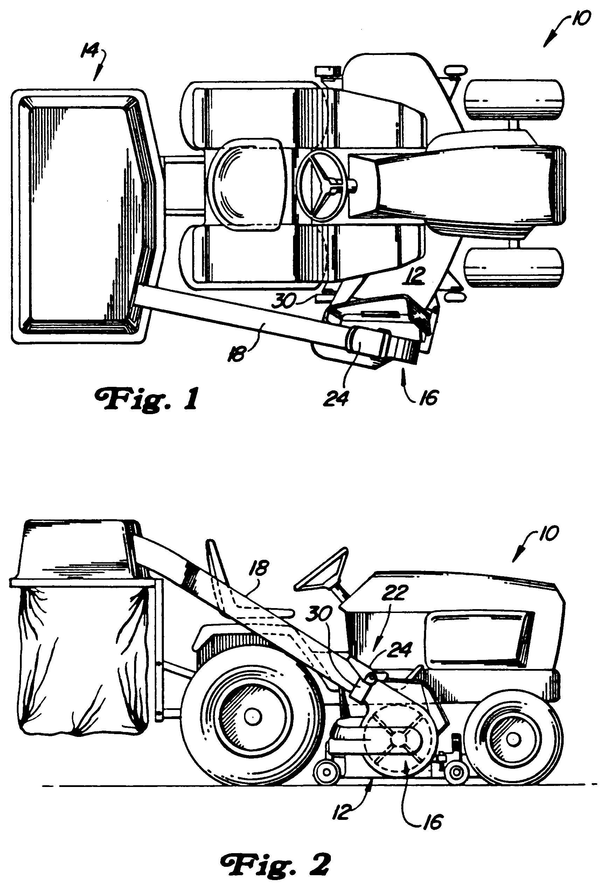

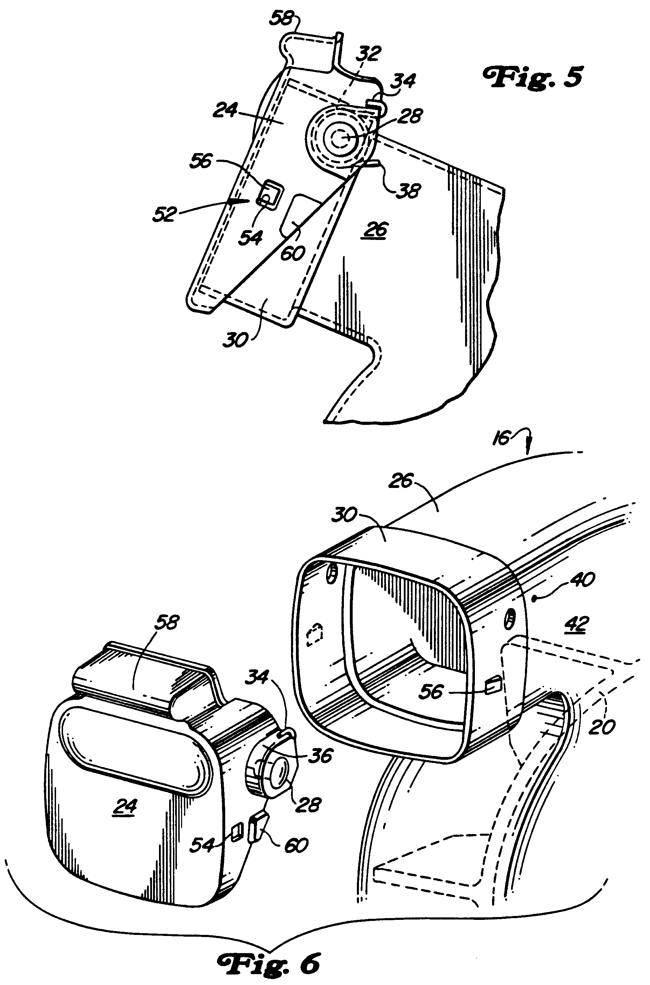

In Fig. 1 der Zeichnung ist ein Fahrzeug 10 in Draufsicht und in Fig. 2 in Seitenansicht dargestellt, das im vorliegenden Fall als ein Kleinschlepper mit einem zwischen seinen Vorder- und Hinterrädern vorgesehenen Arbeitswerkzeug in Form eines Mähwerkes 12 und einem rückwärtig angeschlossenen Fangbehälter 14 für Gras ausgebildet ist. Derartige Fahrzeuge werden insbesondere für die Pflege von großen Park- und Golfplatzanlagen eingesetzt. Das Mähwerk 12 ist mit einem oder mehreren in der Zeichnung nicht dargestellten Sichelmessern versehen, die beim Fahren über eine Anlage beispielsweise Gras abmähen und das geschnittene Gut je nach der Form eines Förderkanals seitlich oder nach hinten auswerfen. Damit das abgemähte Gut nicht auf dem Boden verbleibt, kann es nach dem Schnitt in den Grasfangbehälter 14 geblasen werden, wozu an einer Seite des Mähwerkes 12 ein Hilfsgebläse 16 angebaut sein kann aber nicht muß, dessen Wurf- oder Gebläserad 20 in den Fig. 2 und 6 zu erkennen ist und das über einen Graskanal 18 mit dem Grasfangbehälter 14 in Verbindung steht. Je nachdem, wie das Mähwerk angeordnet ist, kann auch auf den Graskanal verzichtet werden, was insbesondere dann der Fall sein kann, wenn das Mähwerk nicht an einem Fahrzeug angebaut ist, sondern von einer Person an Holmen geführt wird, wie es bei motorgetriebenen Handrasenmähern häufig der Fall ist. In den Ansprüchen ist deshalb von einem Empfängerteil die Rede, unter dem je nach der Ausführung der Graskanal oder der Fangbehälter verstanden werden kann. Das Mähwerk kann auch als Laubsauger dienen oder durch einen solchen ersetzt werden. Ist das in den Grasfangbehälter 14 zu verbringende Gut feucht oder sogar naß, ist meistens ein Hilfsgebläse erforderlich. Dennoch können Verstopfungen nicht ausgeschlossen werden, weshalb der Graskanal 18 von dem Gebläse leicht lösbar sein soll, um mögliche Verstopfungen im Graskanal oder im Bereich des Hilfsgebläses schnell beheben zu können, wobei der Graskanal 18 in den Grasfangbehälter 14 teleskopisch eingesetzt ist. Solche Fahrzeuge sind mit einer Reihe von Sicherheitsmerkmalen versehen, damit die Bedienungspersonen nicht unnötig Gefahren ausgesetzt werden. Eins davon ist, daß sich das Fahrzeug beim Verlassen des Fahrersitzes sofort ausstellt, wobei auch der Antrieb für das Mähwerk und für das Gebläse ausgeschaltet wird.

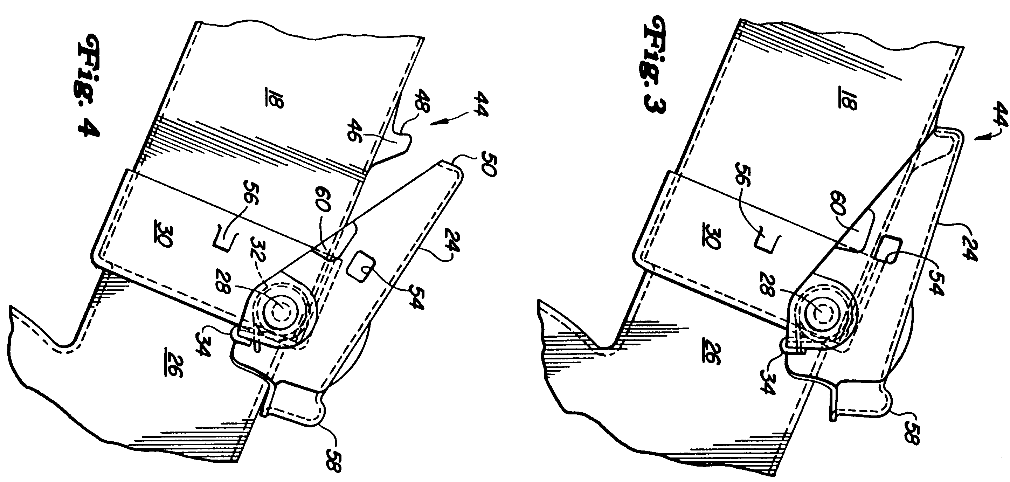

Der Graskanal 18 verläuft beim Ausführungsbeispiel neben dem Fahrzeug 10 und ist von dem nahe dem Boden angeordneten Hilfsgebläse 16 schräg nach oben zu dem oberen Ende des Grasfangbehälters 14 geführt. Bei gelöstem Graskanal 18 besteht damit die Gefahr, daß eine sich auf dem Fahrzeug befindliche Bedienungsperson oder Personen, die sich nahe des Fahrzeuges aufhalten, bei laufendem Mähwerk von Grasstücken oder sich im Gras befindlichen Fremdkörpern, wie Steinen, getroffen werden können. Um diese Gefahr auszuschalten, ist eine Sicherheitseinrichtung 22 vorgesehen, die nachfolgend unter Bezugnahme auf die Fig. 3 bis 6 näher erläutert wird.

Die Sicherheitseinrichtung 22 befindet sich in dem Bereich, in dem sich der noch dem Förderkanal zuzurechnende Gebläseauslaß 26 und das bodenseitige Ende des Graskanals befinden, die im verbundenen Zustand ineinander gesteckt sind. Die Sicherheitseinrichtung 22 besteht im wesentlichen aus einem zwischen zwei Stellungen verschwenkbaren Schutzdeckel 24, der an einer an dem Gebläseauslaß 26 vorgesehenen Manschette 30 vertikal schwenkbar angeschlossen ist, wozu in der Manschette 30 und in dem Schutzdeckel 24 entsprechende Löcher vorgesehen sind, in die Zapfen 28 von beiden Seiten einsteckbar sind. Der Schutzdeckel ist ganz oder in einigen Bereichen elastisch deformierbar, und die Manschette 30 und der Schutzdeckel 24 sind vorzugsweise aus Kunststoff hergestellt, wobei sich in dem Schutzdeckel noch ein Schauloch befindet.

Der Schutzdeckel 24 dient zum einem zum Verschließen des Gebläseauslasses 26 bzw. der Manschette 30 bei abgebautem Graskanal 18 und zum anderen zum Sichern des Graskanals 18 gegen Lösen, wenn er in die Manschette 30 eingesteckt wurde. In beiden Stellungen, die in den Fig. 5 und 3 dargestellt sind, steht der Schutzdeckel 24 unter Federwirkung, wozu an jeder Seite des Schutzdeckels 24 eine Torsionsfeder 28 vorgesehen ist, die bestrebt sind, den Schutzdeckel 24 nach unten in seine in Fig. 5 wiedergegebene Stellung zu verstellen. Die Anordnung beider Federn ist identisch, weshalb nur die Anordnung der rechten Torsionsfeder beschrieben wird mit dem Verständnis, daß die Anordnung der linken Torsionsfeder spiegelbildlich ist. Jede Torsionsfeder 28 ist endseitig abgebogen und umgibt dem Zapfen 28, der in seitlich vorspringende Lageraugen 36 im Deckelrand des Schutzdeckels 24 einsetzbar ist. Das eine abgebogene Ende 34 der Torsionsfeder 28 liegt auf dem Lagerauge 36 an dessen offener Seite auf, während das andere Ende 38 der Torsionsfeder 32 von einer Öffnung 40 (siehe Fig. 6) aufgenommen ist, die beim Ausführungsbeispiel in eine Seitenwand 42 des Gebläseauslasses 26 eingearbeitet ist.

Der Schutzdeckel 24 ist in seinen beiden Stellungen verriegelbar. Hierzu sind zwei Verriegelungseinheiten vorgesehen. Die erste Verriegelungseinheit 44 ist am besten in den Fig. 3 und 4 erkennbar und dient zum Verriegeln bzw. zum Entriegeln von dem bodenseitigen Ende des Graskanals 18 mit bzw. von dem Gebläseauslaß 26 bzw. der Manschette 30. Zu ihr gehört ein sich gegebenenfalls über die gesamte Breite des Graskanals 18 erstreckender und an dessen Oberseite im Bereich des bodenseitigen Endes angebrachter Riegelteil 44 mit einer sich im wesentlichen vertikal erstreckenden und von der Oberseite schräg nach außen geführten Riegelfläche 48, die von dem hakenförmigen Ende 50 des Schutzdeckels 24 erfaßt werden kann. Das hakenförmige Ende 50 ist komplimentär zur Riegelfläche 48 ausgebildet, so daß der Schutzdeckel 24 dem Riegelteil 46 hinterfassen kann, wie es in Fig. 3 dargestellt ist. Der für den Schutzdeckel 24 gewählte Kunststoff ermöglicht ein leichtes Ausbiegen des hakenförmigen Endes 50 zum Hinterfassen des Riegelteils 46 und einen sicheren Sitz gegen die Riegelfläche 48. Diese Verriegelungseinrichtung 44 gewährleistet damit eine besonders einfache aber betriebssichere Verriegelung des in die Manschette 30 eingesteckten Endes des Graskanals 18. Der Riegelteil 46 ist an seinem Ende noch rampenförmig ausgestaltet, so daß zum Einstecken des Graskanals 18 in die Manschette 30 der Schutzdeckel 30 nicht noch von Hand in seine in Fig. 4 dargestellte Stellung angehoben werden muß. Diese Verstellung und die nachfolgende Verriegelung erfolgen selbsttätig. Gegebenenfalls muß der Schutzdeckel 24 noch leicht von Hand in seine erste Riegelstellung nachgedrückt werden. Der Schutzdeckel 24 ist im übrigen noch so ausgebildet, daß er in seiner verriegelten Stellung den Graskanal noch seitlich übergreift.

Aus der Fig. 6 ist zu ersehen, daß der Schutzdeckel 24 den Aussenabmessungen der Manschette 30 angepaßt ist, so daß er diese von allen Seiten umschließen bzw. ummanteln kann. Beim Ausführungsbeispiel ist die Manschette etwa rechteckförmig ausgebildet, und der Schutzdeckel 24 ist mit der Manschette 30 ebenfalls verriegelbar, wozu die zweite Verriegelungseinrichtung 52 vorgesehen ist. Zu dieser gehören im einzelnen zwei in dem Seitenrand oder in die Ummantelung des Schutzdeckels 24 eingearbeitete Öffnungen 54 oder Auswölbungen, in die in der in Fig. 5 gezeigten verriegelten zweiten Stellung Rampen 56 eintreten, die an den Seiten der Manschette 30 nach außen vorstehend vorgesehen sind. Auch die Manschette 30 kann aus einem Kunststoff hergestellt sein, so daß die Rampen beim Gießvorgang direkt mitgeformt werden können. Beim Eintreten der Rampen 56 in die Öffnungen 54 biegen sich die Seitenränder des Schutzdeckels 24 entsprechend aus, die nach dem Einrasten wieder in ihre ursprüngliche Form zurückspringen. Beim Entfernen des Graskanals aus der Manschette 30 kann der Schutzdeckel 24 unter der Wirkung der Federn 32 automatisch in seine in Fig. 5 dargestellte Position verschwenken. Sollten die Rampen 56 nicht sofort in die Öffnungen 54 eintreten, ist ein leichtes Andrücken von Hand angebracht.

Um den Schutzdeckel 24 aus seiner in Fig. 3 wiedergegebenen Stellung in die nach Fig. 4 zu verstellen, in der der Graskanal 18 in die Manschette 30 eingeschoben oder aus dieser herausgezogen werden kann, ist ein Griff- oder Drücketeil 58 an dem dem hakenförmigen Ende 50 abgelegenen Ende des Schutzdeckels 24 vorgesehen. Bei einem Herunterdrücken des Teils 58 von Hand und gegen die Wirkung der Torsionsfedern 32 löst sich die erste Verriegelungseinrichtung 44 und der Schutzdeckel 24 schwenkt in seine in Fig. 4 dargestellte Position. In dieser Stellung läßt sich der Graskanal 18 leicht aus der Manschette 30 herausziehen. Nach dem Entkuppeln schwenken die Torsionsfedern 32 den Schutzdeckel 24 in seine in Fig. 5 wiedergegebene Stellung. Bei diesem Verstellvorgang kann die Bedienungsperson den Schutzdeckel 24 an dem Griffteil 58 führen. In der in Fig. 5 wiedergegebenen Stellung ist der Zugang zu dem Hilfsgebläse 16 bzw. dem Wurfrad 20 für die Bedienungsperson versperrt.

Im normalen Betriebseinsatz nimmt der Schutzdeckel 24 die in Fig. 3 wiedergegebene Stellung ein, in der abgemähtes Gut mit Hilfe des Wurfrades 20 in den Grasfangbehälter 14 gefördert wird. Durch einen Rückstau kann es in dem Graskanal 18 und/oder in dem Gebläse 16 zu Verstopfungen kommen. In einem solchen Fall muß der Mähbetrieb unterbrochen werden. Die Bedienungsperson muß den Fahrersitz verlassen, wobei sich der Motor des Fahrzeuges automatisch abstellt, sofern der Motor nicht vorher von Hand abgestellt wurde. Sobald der Motor abgestellt ist, sind auch die Antriebe für das Mähwerk 12 und das Hilfsgebläse 16 unterbrochen. Danach muß der Graskanal 18 von dem Gebläseauslaß 26 entfernt werden, wozu die Bedienungsperson den Teil 58 in seine in Fig. 4 gezeigte Stellung nach unten drückt. Bei diesem Vorgang gibt das hakenförmige Ende 50 des Schutzdeckels 24 den Riegelteil 46 frei, und der Graskanal 18 kann aus der Manschette 30 herausgezogen werden. Sobald der Graskanal 18 freikommt, schwenkt der Schutzdeckel 24 unter der Wirkung der Federn 32 in seine in Fig. 5 gezeigte Stellung und wird dort selbsttätig verriegelt. Durch das Schauglas im Schutzdeckel 24 kann dann die Bedienungsperson leicht prüfen, ob es auch im Gebläse 16 zu Verstopfungen gekommen ist. Ist das nicht der Fall, braucht lediglich der Graskanal 18 gereinigt zu werden. Ist aber auch der Gebläseauslaß oder das Wurfrad verstopft, so öffnet die Bedienungsperson den Schutzdeckel 24, in dem sie mit ihren Fingern in entsprechende Taschen 60 in den Seitenwänden des Schutzdeckels 24 greift, um diese etwas nach außen zu ziehen, wodurch die zweite Verriegelungseinrichtung 52 entriegelt wird, wonach sich der Schutzdeckel nach oben in seine erste Stellung oder in eine Zwischenstellung verschwenken läßt. Ist auch das Gebläse gereinigt, so wird der Schutzdeckel wieder in seine zweite oder Schließstellung verbracht und das Mähwerk kurzzeitig laufen gelassen, was nur erfolgen kann, wenn die Bedienungsperson auf dem Fahrersitz sitzt, um festzustellen, ob die Störung behoben ist. Sollten sich zu diesem Zeitpunkt noch Partikel in dem Bereich vor dem Gebläseaustritt befinden, so wird ihr Austreten durch den geschlossenen und verriegelten Schutzdeckel 24 verhindert. Sind alle Störungen behoben, kann der Graskanal 18 wieder an den Gebläseauslaß 26 angeschlossen werden. Die Bedienungsperson hat hierzu den Fahrersitz zu verlassen, wobei sich das Mähwerk wieder abschaltet. Sie verbringt den Schutzdeckel 24 in seine in Fig. 4 gezeigte Position, in der sich der Graskanal 18 in die Manschette 30 einschieben läßt. Die Manschette bildet mit dem Gebläseauslaß einen Anschlag, gegen den das Ende des Graskanals anliegen muß, damit der Schutzdeckel 24 mit dem Graskanal 18 verriegelt werden kann. Beim Einschieben des Graskanals kann die Bedienungsperson den Schutzdeckel bereits loslassen, der dann durch die Schrägfläche an dem Riegelteil 46 wieder anhebt und in seine Riegelstellung nach Fig. 3 unter der Wirkung der Federn 32 fällt.

Auf die Federn kann auch verzichtet werden, wenn die Schwenkstellen für den Schutzdeckel so angebracht sind, daß der Schutzdeckel unter dem Einfluß der Schwerkraft in seine zweite in Fig. 5 gezeigte Stellung fallen kann.

## Patentansprüche

1. Maschine zum Mähen und/oder Aufsammeln von Gut, insbesondere Rasenmäher, mit einem das Gut auswerfenden und in einem Gehäuse angeordneten Arbeitswerkzeug (12), einem abkuppelbaren Empfängerteil für das Gut, einem Förderkanal zwischen dem Arbeitswerkzeug und dem Empfängerteil und einem zwischen einer ersten, einer zweiten und einer dritten Stellung verstellbaren und mit dem Förderkanal vertikal schwenkbar verbundenen Schutzdeckel (24), der in seiner ersten Stellung einen Gutfluß zu dem Empfängerteil erlaubt und diesen mit dem Förderkanal über eine erste Verriegelungseinrichtung (44) verriegelt, in seiner zweiten Stellung den Förderkanal verschließt, wenn der Empfängerteil abgekuppelt ist und in seiner dritten Stellung ein Abkuppeln des Empfängerteils von dem Förderkanal erlaubt, dadurch gekennzeichnet, daß der Schutzdeckel (24) in seiner ersten Stellung auf dem Empfängerteil aufliegt und zur Verriegelung zumindest teilweise elastisch deformierbar ausgebildet ist, in der zweiten Stellung über eine zweite Verriegelungseinrichtung (52) mit dem Förderkanal verriegelbar ist und den Förderkanal ummantelt und aus seiner ersten Stellung in seine dritte Stellung hochschwenkbar ist.

2. Maschine nach Anspruch 1, dadurch gekennzeichnet, daß der Schutzdeckel (24) als Schutzkappe mit einer seitlichen Ummantelung derart ausgebildet ist, daß sein eines oberhalb des Förderkanals liegendes vorderes Ende in der ersten Stellung Abstand zu der Oberseite des Förderkanals aufweist, wobei die Ummantelung an die Seiten des Förderkanals vertikal schwenkbar angeschlossen ist.

3. Maschine nach Anspruch 1 oder 2, dadurch gekennzeichnet, daß der Schutzdeckel (24) an seinem dem vorderen Ende abgelegenen rückwärtigen Ende derart ausgebildet ist, daß er in seiner ersten Stellung hinter einen auf der Außenseite des Empfängerteils vorgesehenen Riegelteil (46) greifen kann.

4. Maschine nach einem oder mehreren der vorherigen Ansprüche, dadurch gekennzeichnet, daß die Ummantelung des Schutzdekkels (24) mit Rasterstellen (54) versehen ist, die in der zweiten Stellung in seitliche Vorsprünge (56) an den Seiten des Förderkanals eingreifen.

5. Maschine nach den Ansprüchen 3 und 4, dadurch gekennzeichnet, daß die Ummantelung im Bereich des rückwärtigen Endes des Schutzdeckels und im Bereich der Rasterstellen (54) elastisch deformierbar ausgebildet ist.

6. Maschine nach Anspruch 4, dadurch gekennzeichnet, daß die Vorsprünge (56) rampenförmig ausgebildet sind.

7. Maschine nach Anspruch 3, dadurch gekennzeichnet, daß der Riegelteil (46) an einer Seite mit einer Riegelfläche (48) und an der anderen Seite mit einer Rampe versehen ist.

8. Maschine nach einem oder mehreren der vorherigen Ansprüche, dadurch gekennzeichnet, daß der Schutzdeckel (24) aus einem Kunststoff hergestellt ist und ein Schauloch aufweist.

9. Maschine nach Anspruch 5, dadurch gekennzeichnet, daß der Schutzdeckel (24) im Bereich seiner Rasterstellen (54) mit Griffteilen (60) versehen ist.

10. Maschine nach einem oder mehreren der vorherigen Ansprüche, dadurch gekennzeichnet, daß das Ende des Förderkanals als ein Gebläseauslaß (26) eines Hilfsgebläses (16) ausgebildet ist, der über den Schutzdeckel (24) in seiner ersten Stellung mit einem Gutkanal (18) verriegelbar ist, wobei der Gutkanal (18) zu einem Fangbehälter (14) führt und in der dritten Stellung des Schutzdeckels (24) in den Gebläseauslaß (26) einsetzbar ist.

## Claims

1. A mowing and/or material collecting machine, especially a lawn mower, with a working implement (12) arranged in a housing for ejecting the material, a receiving part for the material, which can be uncoupled, a delivery channel between the working implement and the receiving part and a protective cover (24) which can be adjusted between first, second and third positions and is vertically pivotally connected to the delivery channel, and, in its first position, allows flow of material to the receiving part and locks this to the delivery channel through a first latch device (44), closes the delivery channel in its second position, when the receiving part is uncoupled, and allows uncoupling of the receiving part from the delivery channel in its third position, characterized in that the protective cover (24) bears in its first position on the receiving part and is made at least partially elastically deformable for the locking, can be locked to the delivery channel in its second position by a second latch device (52) and fits around the delivery channel, and can be swung up from its first position into its third position.

2. A machine according to claim 1, characterized in that the protective cover (24) is in the form of a protective cap with a surrounding edge such that its front end lying above the delivery channel is spaced in the first position from the top side of the delivery channel, while the surrounding edge is vertically pivotally connected to the sides of the delivery channel.

3. A machine according to claim 1 to 2, characterized in that the protective cover (24) is so formed at its rear end, remote from the front end, that it can engage in its first position behind a latch part (46) provided on the outside of the receiving part.

4. A machine according to one or more of the preceding claims, characterized in that the surrounding edge of the protective cover (24) is provided with detent locations (54), which engage lateral projections (56) on the sides of the delivery channel in the second position.

5. A machine according to claims 3 and 4, characterized in that the surrounding edge is elastically deformable in the region of the rear end of the protective cover and in the region of the detent locations (54).

6. A machine according to claim 4, characterized in that the projections (56) are of ramp form.

7. A machine according to claim 3, characterized in that the latch part (46) is provided on one side with a latch surface (48) and on the other side with a ramp.

8. A machine according to one or more of the preceding claims, characterized in that the protective cover (24) is made of plastics material and has a sight hole.

9. A machine according to claim 5, characterized in that the protective cover (24) is provided with grip parts (60) in the region of its detent locations (54).

10. A machine according to one or more of the preceding claims, characterized in that the end of the delivery channel is in the form of a blower outlet (26) of an auxiliary blower (16), which can be locked to a material channel (18) by the protective cover (24) in its first position, wherein the material channel (18) leads to a collecting container (14) and can be fitted in the blower outlet (26) in the third position of the protective cover (24).

## Revendications

1. Machine pour couper et/ou collecter une matière, notamment tondeuse à gazon, comportant un outil de travail (12) éjectant la matière et disposé dans un carter, une partie de réception de la matière, qui peut être désaccouplée, un conduit d'entraînement situé entre l'outil de travail et la partie de réception et un couvercle de protection (24) déplaçable entre des première, seconde et troisième positions et pouvant pivoter verticalement avec le conduit d'entraînement et qui, dans sa première position, permet le passage d'un écoulement de matière en direction de la partie de réception et verrouille cette dernière sur le conduit d'entraînement par l'intermédiaire d'un premier dispositif de verrouillage (44), et, dans sa seconde position, ferme le conduit d'entraînement lorsque la partie de réception est désaccouplée et, dans sa troisième position, permet un désaccouplement de la partie de réception par rapport au conduit d'entraînement, caractérisée en ce que le couvercle de protection (24) s'applique, dans sa première position, sur la partie de réception et est agencé de manière à être au moins partiellement déformable élastiquement pour le verrouillage, et peut être verrouillé, dans sa seconde position, sur le conduit d'entraînement par l'intermédiaire d'un second dispositif de verrouillage (52) et enveloppe le conduit d'entraînement et peut être relevé par pivotement depuis sa première position dans sa troisième position.

2. Machine selon la revendication 1, caractérisée en ce que le couvercle de protection (24) est agencé sous la forme d'un capot de protection comportant une enveloppe latérale de telle sorte que, dans la première position, l'une de ses extrémités avant, située au-dessus du conduit d'entraînement, est distante de la face supérieure du conduit d'entraînement, l'enveloppe étant raccordée, de manière à pouvoir pivoter verticalement, aux côtés du conduit d'entraînement.

3. Machine selon la revendication 1 ou 2, caractérisée en ce que le capot de protection (24) est agencé, au niveau de son extrémité arrière, situé à l'opposé de l'extrémité avant, de telle sorte que, dans sa première position, il peut s'engager derrière un élément de verrouillage (46) prévu sur la face extérieure de la partie de réception.

4. Machine selon l'une ou plusieurs des revendications précédentes, caractérisée en ce que l'enveloppe du couvercle de protection (24) est équipée d'éléments d'encliquetage (54), qui, dans la seconde position, engrènent avec des parties saillantes latérales (56) situées des deux côtés du conduit d'entraînement.

5. Machine selon les revendications 3 et 4, caractérisée en ce que l'enveloppe est agencée de manière à être déformable élastiquement dans la zone de l'extrémité arrière du couvercle de protection et dans la zone des éléments d'encliquetage (54).

6. Machine selon la revendication 4, caractérisée en ce que les parties saillantes (56) sont agencées en forme de rampes.

7. Machine selon la revendication 3, caractérisée en ce que la partie de verrouillage (46) comporte d'un côté une surface de verrouillage (48) et de l'autre côté une rampe.

8. Machine selon une ou plusieurs des revendications précédentes, caractérisée en ce que le couvercle de protection (24) est réalisé en une matière plastique et comporte un trou d'observation.

9. Machine selon la revendication 5, caractérisée en ce que le couvercle de protection (24) comporte, au niveau de ses parties d'encliquetage (54), des éléments de préhension (60).

10. Machine selon une ou plusieurs des revendications précédentes, caractérisée en ce que l'extrémité du conduit d'entraînement est agencée sous la forme d'une sortie (26) d'un ventilateur auxiliaire (16), qui, par l'intermédiaire du couvercle de protection (24), peut être verrouillé dans sa première position sur un conduit (18) de circulation de la matière, le conduit (18) de circulation de la matière aboutissant à un récipient de collecte (14) et pouvant être inséré dans la sortie (26) du ventilateur lorsque le couvercle de protection (24) est dans la troisième position.
